# EUROPÄISCHE PATENTANMELDUNG

(11) **EP 4 557 602 A1**
(43) Veröffentlichungstag der Anmeldung: **21.05.2025**
(21) Anmeldenummer: 24211665.5
(22) Anmeldetag: 08.11.2024
(51) Int. Cl.: H02P 5/74, H02P 21/24

(54) **MEHRMOTORENUMRICHTER**

(30) Priorität: 14.11.2023 DE 102023131705
(71) Anmelder: ebm-papst Mulfingen GmbH & Co. KG, 74673 Mulfingen (DE)
(72) Erfinder: Wiedmann, Georg, 74595 Langenburg (DE); Stoll, Benedikt, 74834 Elztal-Neckarburken (DE)
(74) Vertreter: Staeger & Sperling Partnerschaftsgesellschaft mbB

(57) **Zusammenfassung**

Die Erfindung betrifft ein Regelsystem (1) umfassend einen Mehrmotorenumrichter (PWR) zum geregelten Parallelbetrieb einer Anzahl von n EC-Motoren (M1, ..., Mn), deren jeweilige Rotorlage jeweils sensorlos erfasst wird und vom gemeinsamen Umrichter angesteuert wird.

## Beschreibung

Die Erfindung betrifft einen sensorlosen Mehrmotorenumrichter zum Parallelbetrieb von wenigstens zwei, insbesondere mehrerer Motoren sowie ein Regelungsverfahren zum Betreiben der zwei oder mehrerer Motoren an einem gemeinsamen Mehrmotorenumrichter.

Zum sensorlosen bzw. rotorlagegeberfreien Betrieb eines elektrisch kommutierten Motors (PMSM / EC-Motor) an einem Umrichter werden in der Regel die an den Klemmen des Motors angelegten Spannungen sowie die in den Motorphasen fließenden Ströme in geeigneter Art und Weise erfasst und ausgewertet, um die Rotorlage zu bestimmen und den Motor entsprechend zu kommutieren. Im Stand der Technik ist aber keine zufriedenstellende Lösung bekannt, um zwei oder mehrere solcher Motoren (PMSM /EC-Motor) an einem einzigen Umrichter zu betreiben. Wenn in der nachfolgenden Beschreibung von Motoren gesprochen wird, sind sensorlos gesteuerte PMSM-Motoren bzw. sensorlos geregelte EC-Motoren gemeint.

Aus der KR 101 687 556 B1 ist eine Druckschrift bekannt, die sich auf eine Motorantriebsvorrichtung für zwei Motoren bezieht. Die Motorantriebsvorrichtung gemäß einer Ausführungsform dieser Druckschrift umfasst einen Wechselrichter, der eine Anzahl passender Schaltelemente umfasst und einen ersten Motor und einen zweiten Motor mit Wechselstrom versorgt, indem er Gleichstrom durch Schalten der Schaltelemente in Wechselstrom umwandelt, sowie eine Steuereinheit, die den Wechselrichter steuert. Die Steuereinheit stellt einen Sollwert für den magnetischen Flussstrom entsprechend einer Drehzahldifferenz oder einer Phasendifferenz des ersten Motors und des zweiten Motors ein und steuert den Wechselrichter auf der Grundlage eines Schaltsteuersignals, das auf dem eingestellten Sollwert für den magnetischen Flussstrom basiert. Dementsprechend kann ein Drehzahlfehler reduziert werden, wenn mehrere parallel geschaltete Motoren gleichzeitig gesteuert werden.

In der DE 10 2018 124 209 A1 ist ein weiteres Konzept des vorliegenden Anmelders beschrieben. Um Wiederholungen zu einzelnen strukturellen Bausteinen zu vermeiden, wird darauf verwiesen, dass ein Fachmann diese Informationen bereits aus dieser Druckschrift kennt. Eine Grundidee des darin beschriebenen Konzeptes besteht darin, dass zum rotorlagegeberfreien Parallelbetrieb mehrerer, wenigstens zweier, elektrisch kommutierter Motoren an einem gemeinsamen Umrichter für jeden der angeschlossenen Motoren eine separate Erfassung der Phasenströme erfolgt. Darüber hinaus wird jedoch nur eine einzige Spannungserfassung je Umrichterausgangsphase benötigt, da durch den Parallelbetrieb der Motoren, an allen Motoren dieselbe Klemmenspannung anliegt. Alternativ ist auch denkbar, dass die Klemmenspannung nicht erfasst, sondern aus den vom Controller ausgegebenen Aussteuergraden berechnet werden kann.

Ein wesentlicher Unterschied des erfindungsgemäßen Mehrmotoren-Umrichters zu einem herkömmlichen Umrichter besteht in der Erfassung und Verarbeitung der Messsignale zur Rotorlagebestimmung von mehreren Motoren, wobei hierzu für jeden am Mehrmotorenumrichter angeschlossenen Motor eine separate Stromerfassung erfolgt. Ferner ist in der DE 10 2018 124 209 A1 ein Verfahren zum Betreiben von mehreren EC-Motoren im Parallelbetrieb an dem gemeinsamen Mehrmotorenumrichter beschrieben, bei dem die folgende Schritte verwendet werden: Erfassen der einzelnen Phasenströme und der Klemmenspannung der EC-Motoren, Ermittlung der Rotorlagen und Drehzahlen mit Hilfe der zuvor gemessener Kenngrößen, Generieren und Übermitteln von Strom- und/oder Spannungsgrößen in einer Raumzeigerdarstellung bzw. in d-q-Raumzeigerkoordinaten mit Hilfe der zuvor ermittelten Rotorlagen und der Drehzahlen an die Regelungseinrichtung und Generieren von dreiphasigen Spannungsgrößen mittels einer Clarke-Park-Transformation aus den Strom- und/oder Spannungsgrößen in Raumzeigerdarstellung und Weitergabe dieser an einen Modulator. Daraus werden Schaltbefehlen für den Mehrmotorenumrichter zum Betrieb der mehreren EC-Motoren im Parallelbetrieb generiert.

Es ist daher Aufgabe der vorliegenden Erfindung eine alternative Lösung zum Betreiben mehrerer Motoren an einem Umrichter bereit zu stellen, die sich kostengünstig realisieren und möglichst universell einsetzen lässt.

Die Erfindung wird anhand der Merkmale von Anspruch 1 gelöst.

Eine Grundidee der Erfindung besteht darin, dass zum rotorlagegeberfreien Parallelbetrieb mehrerer, wenigstens zweier, elektrisch kommutierter Motoren an einem gemeinsamen Umrichter für jeden der Motoren (PMSM / EC-Motor) eine separate Bestimmung der Rotorlage erfolgt. Dies ist aufgrund der für jeden Motor separat ausgeführten Stromerfassungen am Umrichter z.B. mit einem der zahlreichen bekannten Verfahren zur sensorlosen Rotorlagebestimmung möglich. Der Vorteil liegt darin, dass jeder Motor individuell für regelungstechnische Zwecke in seinem eigenen individuellen Koordinatensystem (KOS) beschrieben werden kann.

Ein weiterer Aspekt betrifft den Umstand, dass durch Addition der entsprechenden Motorströme der EC-Motoren die Summenströme im Umrichter ermittelt werden können, mit dem Nutzen daraus das Koordinatensystem des Umrichters zu bestimmen.

In einer bevorzugten und hier beispielhaft beschriebenen Ausführungsform des Regelverfahren wird das Koordinatensysteme eines Mastermotors als Referenz- Koordinatensystem verwendet. Als Mastermotor wird einer der Motoren verwendet, während die weiteren Motoren dann nicht die Funktion des Mastermotors haben.

Es kann jedoch auch jedes der anderen Koordinatensysteme (KOS), oder alternativ ein geeignetes fiktives Koordinatensystem (KOS), als Referenzsystem fungieren, welches als solches im System spezifiziert wird.

Erfindungsgemäß werden zwei alternative Regelungskonzepte umgesetzt. Einerseits die Regelung mit einem nichtlinearen und alternativ mit einem linearen Zustandsraumregler. Beide Varianten sind geeignet, die erfinderische Idee umzusetzen.

Regelung mit einem nichtlinearen Zustandsraumregler

Die Regelung des Mehrmotorensystems kann durch eine Reglerimplementierung mit einem nichtlinearen Zustandsraumregler im Zustandsraum erfolgen. Die Regelung kann hierbei auf Basis der nichtlinearen Differentialgleichungen der Maschinengleichungen durchgeführt werden. Ferner wird gemäß einer bevorzugten Ausgestaltung der Erfindung ergänzend ein Stabilisierungsregler benötigt, um nach einem Lastsprung durch eine Einprägung eines d-Stroms die Motoren wieder in einen stabilen Arbeitspunkt zu führen.

Regelung mit einem linearen Zustandsraumregler

Die Regelung des Mehrmotorensystems muss nicht auf Basis der nichtlinearen Motor- Differentialgleichungen d.h. der Maschinengleichungen durchgeführt werden. Hierbei kann alternativ eine Linearisierung der Differentialgleichungen in einem beliebig wählbaren Arbeitspunkt durchgeführt werden. Der Vorteil der linearen Zustandsraumreglung liegt in dem Nutzen, dass durch die Linearisierung die Reglerauslegung vereinfacht wird. Der Regler kann nun nach den dem Fachmann bekannten Auslegungsvarianten für die lineare Zustandsraumregelung berechnet werden.

Durch das Vorhandensein mehrerer Motoren und damit auch mehrerer Koordinatensysteme für die jeweiligen Motoren, ist es notwendig in geeigneter Art und Weise ein Referenz-Koordinatensystem für die Kommutierung des Umrichters zu bestimmen. Im hier beschriebenen Regelverfahren wird das Koordinatensystem des Mastermotors als Referenz- Koordinatensystem verwendet. Es kann jedoch auch jedes der anderen Koordinatensysteme, oder sogar ein geeignetes fiktives KOS, als Referenzsystem fungieren.

Ein weiterer Aspekt der vorliegenden Erfindung betrifft ein Verfahren zum Betreiben von n EC-Motoren (mit n≥2, d. h. mit wenigstens zwei EC-Motoren) im Parallelbetrieb an einem gemeinsamen Mehrmotorenumrichter insbesondere mit einem wie zuvor beschriebenen Steuerungssystem mit den folgenden Schritten:
a. Getrenntes Erfassen der einzelnen Phasenströme I_{M1}, ..., I_{Mn} der n EC-Motoren,
b. Ermittlung der Rotorlagen und Drehzahlen der n EC-Motoren mit Hilfe der zuvor gemessenen Phasenströme I_{M1}, ..., I_{Mn} der n EC-Motoren, um daraus für jeden der n EC-Motoren ein eigenes separates, insbesondere unabhängiges Koordinatensystem (KOS) zu bestimmen;
c. Generieren und Übermitteln von Strom- und/oder Spannungsgrö-ßen in einer Raumzeigerdarstellung auf Basis der in Schritt b) ermittelten Werte der ermittelten Rotorlagen an die Regelungseinrichtung,
d. Generieren von dreiphasigen Spannungsgrößen U_{uvw} mittels einer Clarke-Park-Transformation aus den Spannungsgrößen in Raumzeigerdarstellung und Weitergabe dieser an einen Modulator;
e. Generieren von Schaltbefehlen mittels des Modulators aus den Spannungsgrößen U_{uvw} für den Mehrmotorenumrichter zur Steuerung des Betriebs der n EC-Motoren,
f. wobei die Regelung der n EC-Motoren vom Umrichter in Bezug auf einen ausgewählten Referenz-Motor und dessen Referenz-Koordinatensystem erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Blockschaltbild eines Regelsystem gemäß einer ersten Ausführungsform der Erfindung ausgebildet als Regelung mit einem nichtlinearen oder linearen Zustandsraumregler R;
- Fig. 2: ein Blockschaltbild eines nichtlinearen Zustandsraumreglers R ergibt sich zu folgendem Blockschaltbild,
- Fig. 3: eine beispielhafte Trajektorienvorgabe für die Drehzahl,
- Fig. 4: eine Kurve, die das Einschwingverhalten der Drehzahl der beiden Motoren M1 und M2,
- Fig. 5: die Drehmomentveränderung nach einem Lastsprung,
- Fig. 6: den feldorientierter Stromverlauf im geregelten Betrieb mittels des Stabilisierungsreglers,
- Fig. 7: die Winkeldifferenz zwischen den beiden Motoren im geregelten Betrieb.

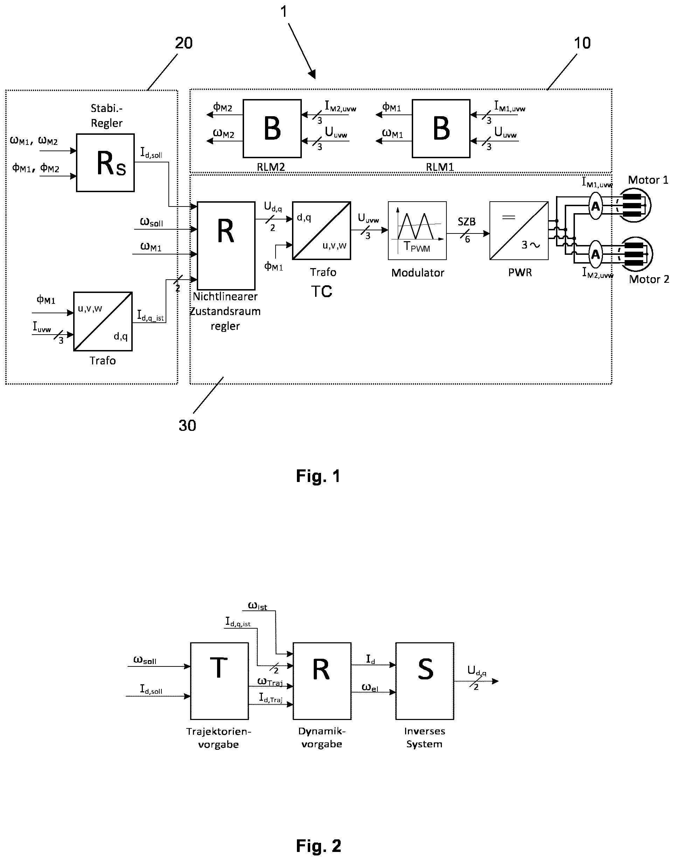

Im Folgenden wird die Erfindung anhand zweier Ausführungsformen mit Bezug auf die Figur 1 näher erläutert, wobei gleiche Bezugszeichen in den Figuren auf gleiche strukturelle und/oder funktionale Merkmale hinweisen.

Die beiden Ausführungsformen sind durch die Figur 1 gleichermaßen darstellbar, da der Unterschied in dem Zustandsraumregler R besteht, welcher entweder als nichtlinearer Zustandsraumregler R (wie dargestellt) oder alternativ als linearer Zustandsraumregler R konzipiert ist. Die Figur 1 zeigt ein Regelsystem 1 umfassend einen Mehrmotorenumrichter PWR zum geregelten Parallelbetrieb einer Anzahl an n EC-Motoren M1, M2, (hier mit n =2) dargestellt, deren jeweilige Rotorlage jeweils sensorlos erfasst wird.

Hierzu ist eine Erfassungseinrichtung 10 mit Rotorlagenermittler RLM₁, RLM₂ zur Ermittlung zumindest der Rotorlagen Φ _{M1},Φ _{M2} und Drehzahlen ω_{M1} und ω_{M2} der beiden EC-Motoren (M1, M2) mit Hilfe der zuvor gemessener Phasenströme I_{M1}, I_{M2} und der Klemmenspannung U_{u,v,w} der beiden EC-Motoren vorgesehen. Die Erfassungseinrichtung 10 ist ferner ausgebildet den Summenstrom I_{uvw} zu erhalten, wobei der Summenstrom I_{uvw} = I_{M1} + I_{M2} ist und als Eingangsgröße für die Ermittlung der Größen Rotorlage φ_{U} und Drehzahl ω_{U} neben der Klemmenspannung U_{uvw} verwendet wird.

Somit weist die Erfassungseinrichtung 10 die Einrichtungen RLM1, RLM2 auf, die zum Bestimmen der Rotorlagen und der jeweiligen Drehzahl ω_{M1}, ω_{M2} der beiden Motoren M1, M2 ausgebildet sind.

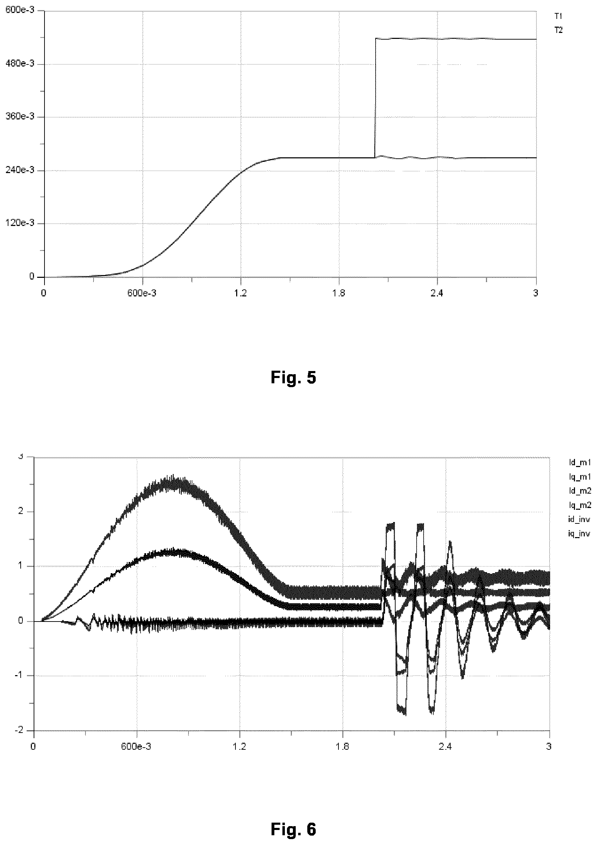

Ferner ist in beiden Ausführungsformen eine Regelungs- und Transformationseinrichtung 20 vorgesehen, um mit Hilfe der ermittelten Rotorlagen und der Drehzahlen zur Regelung der beiden Motoren über einen Stabilisierungsregler RS einen entsprechenden d-Strom I_{d,Soll} im d-q-Koordinatensystem zu generieren und als Sollvorgabe dem linearen oder nichtlinearen Zustandsregler R zuzuführen bzw. zur Stabilisierung einzuprägen, um die beiden Motoren (wie in der Figur 5 dargestellt) wieder in einen stabilen Arbeitspunkt zu bringen. Ferner ist ein Transformator T vorgesehen. Die Regelungs- und Transformationseinrichtung 20 weist bevorzugt einen Clarke-Park-Transformator zum Transformieren von den erfassten Größen Rotorlage und Summenstrom I_{uvw} in eine d-q-Stromgröße I_{d,q_ist} in Raumzeigerdarstellung für die Regelungseinrichtung 30 auf.

Somit wird als Eingangsgröße ein I_{dq,Ist} Strom dem nichtlinearen oder linearen Zustandsregler R der Regelungseinrichtung 30 zugeführt wird. Neben der ermittelten Drehzahl wir dem Zustandsregler R jeweils auch noch die Solldrehzahl ω_{Soll} als Regelgröße eingeprägt bzw. zugeführt.

In der Figur 2 ist ein Blockschaltbild eines nichtlinearen Zustandsraumreglers R gezeigt. Über die Trajektorienvorgabe wird eine mathematische Funktion für das Anlaufverhalten der Drehzahl und des Stroms id implementiert, welche als definierte Dynamikvorgabe für die Sollwertänderung des Zustandsraumreglers verwendet wird. Über diese Dynamikvorgabe wird der Sollwertfehler zwischen Soll- und Istwert reduziert und somit das System eingeregelt. Das inverse System dient daraufhin dazu die berechneten Regelgrößen id und ωₑₗ auf Basis der Systemdifferentialgleichungen in die zu stellenden Spannungsgrößen Ud und Uq umzurechnen.

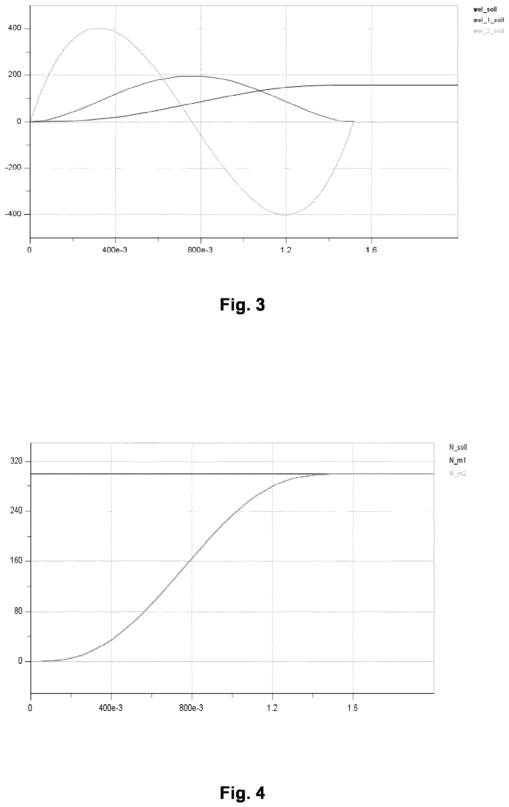

Die Figur 3 stellt eine beispielhafte Drehzahltrajektorie dar. Eine entsprechende Trajektorienvorgabe wird bei dem nichtlinearen Zustandsraumreglers R als Eingangsgröße verwendet. Neben den Ist-Größen für Drehzahl und den I_{dq}-Strom werden über die Trajektorienvorgabe zusätzlich Vorgabewerte für die Drehzahl und den Strom dem Zustandsraumregler R eingegeben. Durch die Trajektorienvorgabe wird dem System eine Anlaufdynamik vorgegeben. Die Dynamik des Regelkreises kann anhand der Eigenwerte des Systems oder frei gewählten Polstellen eingestellt werden. Dies entspricht dem Standartauslegungsverfahren für Zustandsraumregler, das in der Literatur zu finden ist. Die Änderung der Sollgrößen werden daraufhin dem inversen System übergeben, dass auf Basis der durch den Regler vorgegebenen Größen die anzulegenden Klemmenspannungen U_{d,q} berechnet.

Die Regelungseinrichtung 30 generiert ferner Schaltbefehle SZB für den Mehrmotorenumrichter PWR zum Betrieb der beiden Motoren M1, M2.

Wie bereits erläutert ist die Trajektorie der Drehfrequenz in Abbildung 3 zu sehen. Hierbei wird eine Drehzahl von 300 1/min in einer Zeit von 1,5 Sekunden angefahren. Auf Basis der gegebenen Solltrajektorie regelt nun der Zustandsregler R die Drehzahl auf den gewünschten Sollwert.

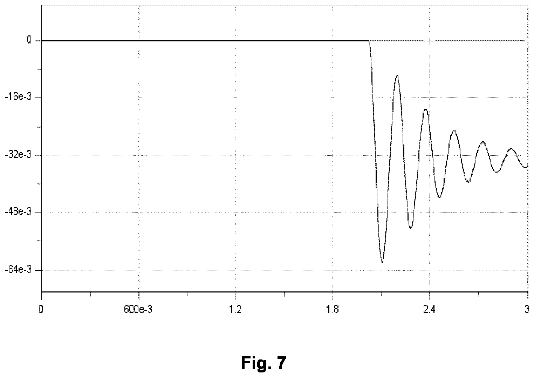

In Abbildung 4 ist das Einschwingverhalten der Drehzahl an beiden Motoren M1, M2 zu sehen. Nach circa 2 Sekunden Simulationszeit wird das eingeschwungene System mit dem dargestellten Lastsprung angeregt. Hierbei wird das Moment am Motor 1 verdoppelt, was in der Figur 5 dargestellt ist. Der Stabilisierungsregler greift nun durch eine Einprägung eines d-Stroms (wie in der Figur 6 erläutert) ein und bringt die beiden Motoren M1, M2 wieder in einen stabilen Arbeitspunkt, was in der Figur 7 dargestellt ist.

Im Diagramm zur Winkeldifferenz in der Figur 7 ist zu sehen, dass sich das System nach dem Lastsprung mit einer bleibenden Winkeldifferenz stabilisiert. Vor dem Lastsprung ergibt sich im eingeschwungenen Zustand eine Winkeldifferenz von nahe null. Nach dem Lastsprung ergibt sich eine Abweichung von rund 0,03 Radiant, was in etwa 1,71 Grad entspricht. Die Abweichung ist im zu erwartenden Bereich, da sich durch die nun unterschiedlichen Belastungen die Koordinatensysteme der Motoren leicht gegeneinander verdrehen.

Bei dem alternativen Ausführungsbeispiel mit einem linearen Zustandsraumregler kann prinzipiell auf die Figuren 1, 3 - 7 verwiesen werden, da das resultierende Verhalten des Mehrmotorensystems prinzipiell vergleichbar ist. Als Bezugskoordinatensystem wird hierbei der Winkel der Rotorlagebestimmung RML1 verwendet. Der Regler arbeitet einerseits auf Basis einer d-Stromsollvorgabe durch den Stabilisierungsregler der Figur 1. Ein solcher kann z.B. dem Konzept aus der DE 10 2018 124 209 A1 entsprechen.

Die Solldrehfrequenz kann durch eine Trajektorienvorgabe oder alternativ durch einen fixen Sollwert vorgegeben werden. Der Zustandsregler R stellt daraufhin auf Basis des gemessenen d-Stroms und der gemessenen Drehfrequenz die passenden Spannungen ein. Per Clarke-Park-Transformation und anschließendem PWM-Modulator werden dann die Schaltbefehle auf den Umrichter gegeben.

Das linear geregelte System reagiert ebenso gut auf den angebrachten Lastsprung nach ca. zwei Sekunden. Der Stabilisierungsregler greift ebenfalls durch eine Einprägung eines d-Stroms ein und bringt die beiden Maschinen wieder in einen stabilen Arbeitspunkt (vgl. Figur 7). Der linearisierte Regler schafft es allerdings nicht gleichermaßen den d-Anteil des Motorstroms auf null zu reduzieren. Ferner besitzt der geregelte Strom einen etwas höherer Rippel bei gleicher Systemdynamik.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Regelsystem (1) umfassend einen Mehrmotorenumrichter (PWR) zum gesteuerten Parallelbetrieb einer Anzahl an n EC-Motoren (M1, ..., Mn), deren jeweilige Rotorlage jeweils sensorlos erfasst wird, wobei n ≥ 2, umfassend
a. wenigstens eine Erfassungseinrichtung (20) zur getrennten Ermittlung wenigstens der Rotorlagen und Drehzahlen der n EC-Motoren (M1, ..., Mn) mit Hilfe zuvor gemessener Phasenströme I_{M1}, .., I_{Mn} mit separat ausgeführten Stromerfassungen und optional der Klemmenspannung U_{u,v,w} der n EC-Motoren (M1, ..., Mn) am Umrichter, wobei jeder der n EC-Motoren (M1, ..., Mn) für die Regelung in seinem eigenen Koordinatensystem (KOS) beschrieben ist,
b. eine Regelungs- und Transformationseinrichtung (20) umfassend einen Stabilisationsregler (RS), der aus den ermittelten Rotorlagen und Drehzahlen der n-Motoren einen d-Strom generiert,
c. eine der Regelungs- und Transformationseinrichtung (20) nachgeschaltete Regelungseinrichtung (30) aufweisend einen linearen oder nichtlinearen Zustandsregler (R), dem die von der Regelungs-und Transformationseinrichtung (20) ausgegebenen Stromgrößen zugeführt werden, um daraus Schaltbefehle (SZB) für den Mehrmotorenumrichter zum Betrieb der n Motoren zu generieren.

2. Regelsystem (1) gemäß Anspruch 1, **dadurch gekennzeichnet, dass** für die Drehzahlvorgabe an den Zustandsregler (R) eine Trajektorienvorgabe oder ein fester Sollwert verwendet wird.

3. Regelsystem (1) gemäß Anspruch 1 oder 2, **dadurch gekennzeichnet, dass** die Erfassungseinrichtung RLM1, RLM2 wenigstens eine Messeinrichtung zum sensorlosen Erfassen der jeweiligen Phasenströme I_{M1}, .., I_{Mn} der n EC-Motoren (M1, ..., Mn) aufweist.

4. Regelsystem (1) gemäß einem der Ansprüche 1 bis 3, **dadurch gekennzeichnet, dass** die Regelungs- und Transformationseinrichtung (20) einen Clarke-Park-Transformator (TP) zum Transformieren von wenigstens den Größen Rotorlage und Summenstrom I_{uvw} in eine d-q-Stromgröße I_{d,q_ist} in Raumzeigerdarstellung für die Regelungseinrichtung (30) aufweist.

5. Regelsystem (1) gemäß einem der Ansprüche 1 bis 4, **dadurch gekennzeichnet, dass** die Regelungseinrichtung (30) einen Clarke-Park-Transformator (TC) aufweist, um die vom Zustandsraumregler (T) erhaltenen Spannungsgrößen U_{d,q} in Raumzeigerdarstellung mittels Clarke-Park-Transformation in eine dreiphasige Spannungsgröße U_{uvw} zu transformieren und diese mittels eines PWM-Modulators (PWM) in Gleichspannungs-Schaltsignale (SZB) für den Umrichter (PWR) zu wandeln.

6. Regelsystem (1) gemäß einem der Ansprüche 1 bis 5, **dadurch gekennzeichnet, dass** der Stabilisierungsregler (R) zum Bereitstellen einer passenden Stromgröße I_{d_SOLL} vorgesehen ist, um diese Stromgröße dem Zustandsregler einzuprägen, um nach einem Lastsprung bei einem der EC-Motoren die Motoren in einen stabilen Arbeitspunkt zurück zu bringen.

7. Regelsystem (1) gemäß einem der Ansprüche 1 bis 6, **dadurch gekennzeichnet, dass** die Regelungseinrichtung (30) einen Clarke-Park-Transformator (TC) aufweist, um die in Raumzeigerdarstellung vom Zustandsraumregler (R_{dq}) erhaltenen Spannungsgrößen U_{d,q} mittels Clarke-Park-Transformation in eine dreiphasige Spannungsgröße U_{uvw} zu transformieren und diese mittels eines PWM-Modulators (PWM) in Schaltsignale (SZB) für den Umrichter (PWR) zu wandeln.

8. Verfahren zum Betreiben von n EC-Motoren mit n≥2 im Parallelbetrieb an einem gemeinsamen Mehrmotorenumrichter (PWR) mit einem Regelsystem (1) gemäß einem der Ansprüche 1 bis 7, mit den folgenden Schritten:
a. Getrenntes Erfassen der einzelnen Phasenströme I_{M1}, .., I_{Mn} der n EC-Motoren (M1, ..., Mn),
b. Ermittlung der Rotorlagen und Drehzahlen der n EC-Motoren (M1, ..., Mn) mit Hilfe der zuvor gemessenen Phasenströme I_{M1}, .., I_{Mn} der n EC-Motoren (M1, ..., Mn), um daraus für jeden der n EC-Motoren (M1, ..., Mn) ein eigenes separates, insbesondere unabhängiges Koordinatensystem (KOS) zu bestimmen;
c. Generieren und Übermitteln von Strom- und/oder Spannungsgrö-ßen in einer Raumzeigerdarstellung auf Basis der in Schritt b) ermittelten Werte der ermittelten Rotorlagen an die Regelungseinrichtung (30),
d. Generieren von dreiphasigen Spannungsgrößen U_{uvw} mittels einer Clarke-Park-Transformation aus den Spannungsgrößen in Raumzeigerdarstellung und Weitergabe dieser an einen Modulator (PWM);
e. Generieren von Schaltbefehlen (SZB) mittels des Modulators (PWM) aus den Spannungsgrößen U_{uvw} für den Mehrmotorenumrichter (PWR) zur Steuerung des Betriebs der n EC-Motoren,
f. wobei die Regelung der n EC-Motoren in Bezug auf einen ausgewählten Referenz-Motor und dessen Referenz-Koordinatensystem erfolgt.
